# EUROPÄISCHE PATENTSCHRIFT

(11) **EP 2 606 208 B1**
(45) Veröffentlichungstag und Bekanntmachung des Hinweises auf die Patenterteilung: **27.04.2016**
(21) Anmeldenummer: 11749786.7
(22) Anmeldetag: 15.08.2011
(51) Int. Cl.: F01N 3/035, F01N 3/20, F01N 3/28

(54) **KOMPAKTE ABGASBEHANDLUNGSEINHEIT MIT REAKTIONSMITTELZUGABE**
COMPACT EXHAUST GAS TREATMENT UNIT HAVING REACTION AGENT ADDITION
UNITÉ DE TRAITEMENT DES GAZ D'ÉCHAPPEMENT COMPACTE AVEC AJOUT DE RÉACTIF

(30) Priorität: 18.08.2010 DE 102010034705
(43) Veröffentlichungstag der Anmeldung: 26.06.2013
(73) Patentinhaber: Continental Automotive GmbH, 30165 Hannover (DE)
(72) Erfinder: BRUGGER, Marc, 53819 Neunkirchen-Seelscheid (DE)
(86) Internationale Anmeldenummer: PCT/EP2011/064048
(87) Internationale Veröffentlichungsnummer: WO 2012/022722

(56) Entgegenhaltungen:
- WO-A1-97/43528
- GB-A- 2 434 557

## Beschreibung

Gegenstand der Erfindung ist eine kompakte Abgasbehandlungseinheit, in der das Abgas mehrfach umgelenkt wird. Dabei erfolgt in dieser Abgasbehandlungseinheit zudem eine Behandlung des Abgases mit einem Additiv bzw. Reaktionsmittel und gegebenenfalls auch mit wenigstens einem Katalysator, Filter, etc.

Aufgrund des stetig steigenden Automobilverkehrs und der strenger werdenden Abgasnormen ist es für Kraftfahrzeuge mit einer Verbrennungskraftmaschine wichtig, dass die Abgase der Verbrennungskraftmaschine effizient gereinigt werden. Dazu sind aus dem Stand der Technik Abgasreinigungssysteme bekannt, bei welchen das Abgas der Verbrennungskraftmaschine an einer katalytisch wirksamen Oberfläche vorbeigeführt wird und Schadstoffe im Abgas, wie Stickstoffoxidverbindungen, Rußpartikel, Kohlenmonoxid, Kohlenwasserstoffe, etc. unter Beihilfe eines an dieser Oberfläche angelagerten Katalysatormaterials zu Substanzen wie Stickstoff, Wasser und CO₂ umgesetzt werden. Für die effiziente Umsetzung von Abgasen sind regelmäßig verhältnismäßig hohe Abgastemperaturen erforderlich. Die Temperatur der Abgase einer Verbrennungskraftmaschine sind regelmäßig direkt nachdem die Abgase die Verbrennungskraftmaschine verlassen haben am höchsten, so dass hier in der Nähe der Verbrennungskraftmaschine (z. B. im Motorraum eines Kraftfahrzeugs) ein günstiger Ort ist, ein Abgasreinigungssystem anzuordnen. Allerdings ist der Bauraum in Motornähe bei Kraftfahrzeugen regelmäßig sehr begrenzt.

Um den begrenzten Bauraum im Motorraum trotzdem für Abgasreinigungssysteme nutzen zu können, sind besonders kompakte Abgasbehandlungseinheiten mit konzentrischer Durchströmung entwickelt worden, welche bspw. aus der WO-A1-2005001252 bekannt sind. Bei einem solchen Abgassystem durchströmt das Abgas zunächst einen Hinströmbereich, wird dann umgelenkt und strömt durch einen äußeren Rückströmbereich zurück. Der Rückstrombereich ist dabei konzentrisch um den Hinströmbereich herum angeordnet, so dass ein effizienter Wärmeaustausch zwischen Hinströmbereich und Rückströmbereich erfolgt. Die an den Katalysatoroberflächen eines Abgassystems ablaufenden katalytischen Reaktionen sind teilweise meist auch exotherm, so dass die rückströmenden Abgase regelmäßig zusätzlich erwärmt werden. Durch den effizienten Wärmeaustausch zwischen Hinströmung und Rückströmung kann so die Abgastemperatur im Abgassystem erhöht bzw. hochgehalten werden, so dass eine besonders effiziente Umsetzung erfolgt. Gleichzeitig wird durch die Aufteilung des Abgassystems in Hinströmbereich, Umlenkbereich und Rückströmbereich eine besonders kompakte Anordnung des Abgassystems erreicht, so dass die Anordnung des Systems im Motorraum bzw. in der Nähe der Verbrennungskraftmaschine eines Kraftfahrzeugs erfolgen kann. Ein ähnliches System ist auch aus der WO 97/43528 A1 bekannt.

Bei derartigen Abgasreinigungssystemen ist es zum Teil vorgesehen, ein Reaktionsmittel zum Abgas hinzuzugeben. Dieses Reaktionsmittel umfasst z. B. ein Reduktionsmittel oder einen Reduktionsmittelvorläufer (insbesondere flüssige Harnstoff-Wasser-Lösung), das dazu beiträgt, Schadstoffe im Abgas im Zusammenspiel mit speziell dafür vorgesehenen Beschichtungen in harmlose Komponenten umzuwandeln. Derartige Zugabeeinheiten für diese Reaktionsmittel sind dabei so angeordnet, dass eine möglichst optimale Verteilung im Abgas bzw. ein hoher Verdampfungsgrad des zugeführten Reaktionsmittels erreicht wird. Dabei wird das Reaktionsmittel in Strömungsrichtung oder entgegen der Strömungsrichtung des Abgases z.B. direkt auf Wabenkörper aufgebracht, so dass durch das Auftreffen des Reaktionsmittels auf den (heißen) Wabenkörper die Verdampfung durch das Auftreffen gefördert und eine feine Verteilung der Reaktionsmitteltropfen sowie ggf. eine Speicherung des Reaktionsmittels in der Struktur oder in der Beschichtung des Wabenkörpers erreicht wird. Dieses Aufbringen des Reaktionsmittels auf einen Wabenkörper kann jedoch auch dazu führen, dass die Beschichtung des Wabenkörpers z. B. durch Wasserschlag oder durch den Temperaturunterschied zwischen Wabenkörper und Reaktionsmittel beschädigt wird.

Hiervon ausgehend ist es Aufgabe der hier vorliegenden Erfindung, die im Zusammenhang mit dem Stand der Technik geschilderten technischen Probleme zumindest teilweise zu lösen. Es soll insbesondere eine Abgasbehandlungseinheit angegeben werden, die einerseits einen kompakten Aufbau gewährleistet und andererseits eine besonders geeignete Zugabe von flüssigem Reaktionsmittel mit einer die Komponenten der Abgasbehandlungseinheit schonenden Verdampfung ermöglicht.

Diese Aufgaben werden gelöst mit einer Abgasbehandlungseinheit gemäß den Merkmalen des Patentanspruchs 1. Vorteilhafte Ausgestaltungen der erfindungsgemäßen Abgasbehandlungseinheit bzw. deren Anordnung in einem Kraftfahrzeug sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombinierbar sind und weitere Ausgestaltungen der Erfindung aufzeigen. Die Beschreibung, insbesondere im Zusammenhang mit den Figuren, erläutert die Erfindung weiter und führt ergänzende Ausführungsbeispiele der Erfindung an.

Die erfindungsgemäße Abgasbehandlungseinheit weist strömungstechnisch hintereinander angeordnet zumindest einen Hinströmbereich, einen ersten Umlenkbereich, einen Rückströmbereich und einen Abströmbereich auf. Der Rückströmbereich und der Abströmbereich sind dabei auf einer Außenfläche des Hinströmbereichs angeordnet. Eine Zugabeeinheit für ein Reaktionsmittel ist dabei im Abströmbereich angeordnet, wobei die Zugabeeinheit derart angeordnet ist, dass das Reaktionsmittel zumindest teilweise auf die Außenfläche des Hinströmbereichs zugebbar ist, wobei die Zugabeeinheit hierfür radial außerhalb des Hinströmbereichs angeordnet und hin zum Hinströmbereich ausgerichtet ist.

Das Abgas strömt ausgehend von der Verbrennungskraftmaschine durch eine Abgasleitung hin zu der Abgasbehandlungseinheit und tritt in diese über einen Hinströmbereich ein. Nach dem Durchströmen des Hinströmbereichs wird das Abgas in einem ersten Umlenkbereich so umgelenkt, dass es insbesondere (konzentrisch) außen um den Hinströmbereich durch den Rückströmbereich hin zu einem Abströmbereich strömt. Der Rückströmbereich und der Abströmbereich sind dabei insbesondere auf der Außenfläche des Hinströmbereichs angeordnet. Das (konzentrisch) außen um den Hinströmbereich strömende Abgas wird nach Durchströmen des Rückströmbereichs im Abströmbereich zusammengeführt und tritt insbesondere über eine einzelne Abgasleitung aus der Abgasbehandlungseinheit aus. Die Zugabeeinheit zur Zugabe eines Reaktionsmittels (insbesondere Harnstoff-Wasser-Lösung) ist hierbei im Abströmbereich angeordnet. Damit wird das Reaktionsmittel bevorzugt in dem letzten Strömungsabschnitt der Abgasbehandlungseinheit zugegeben. Gerade an dieser Stelle ist vielfach ein kleiner Strömungsquerschnitt und/oder eine verwundene Strömungsführung vorgesehen, ein Strömungsabschnitt, der folglich eine zumindest teilweise turbulente Strömung erzeugt und somit förderlich für die Zugabe von Reaktionsmittel ist. In diesem Bereich der Abgasbehandlungseinheit sind regelmäßig keine Wabenkörper angeordnet, auf die das Reaktionsmittel entsprechend treffen könnte. Das Reaktionsmittel wird durch die Zugabeeinheit im Abströmbereich dem Abgas zugegeben, wo es sich mit dem Abgas vermischt und durch das heiße Abgas zumindest teilweise verdampft. Erst nach Verlassen der Abgasbehandlungseinheit und nach weitestgehender Verdampfung bzw. feinen Verteilung des Reaktionsmittels trifft das Abgas erneut auf in der Abgasleitung ggf. angeordnete Abgasreinigungskomponenten, die Wabenkörper umfassen. Hier liegt jedoch eine bereits so starke Verteilung des Reaktionsmittels im Abgasstrom vor, dass eine Schädigung z. B. von Beschichtungen aber auch von Strukturen der im Abgasstrom angeordneten Wabenkörper vermieden wird.

Die Zugabeeinheit ist so angeordnet, dass das Reaktionsmittel zumindest teilweise auf die Außenfläche des Hinströmbereichs zugebbar ist. Die Zugabeeinheit ist hierfür radial außerhalb des Hinströmbereichs angeordnet und hin zum Hinströmbereich ausgerichtet. Durch eine derartige besonders vorteilhafte Anordnung der Zugabeeinheit trifft das Reaktionsmittel zumindest teilweise auf die Außenfläche des Hinströmbereichs, die aufgrund der Nähe zur Verbrennungskraftmaschine bereits frühzeitig eine recht hohe Temperatur aufweist und/oder durch Wärmeleitung mit einem benachbarten katalytisch aktiven Katalysator verbunden ist. Durch das Auftreffen auf der Außenfläche wird das insbesondere zumindest teilweise tropfenförmig aus der Zugabeeinheit austretende Reaktionsmittel hinsichtlich der Tropfengröße feiner zerstäubt und entsprechend besser im Abgasstrom verteilt. Durch die sich somit vergrößernde Oberfläche des Reaktionsmittels wird die Verdampfung des Reaktionsmittels im Abgasstrom gefördert. Da die Außenfläche des Hinströmbereichs durch z. B. ein (robustes) Rohr bzw. durch einen Mantel gebildet wird, wird eine Beschädigung dieser Außenfläche, wie es z. B. bei Wabenkörperstrukturen sonst der Fall sein könnte, vermieden.

Es wird weiter vorgeschlagen, dass im Bereich des Hinströmbereichs Mittel zur Verbesserung des Wärmeübergangs vorgesehen sind, so dass die Wandtemperatur der Außenfläche des Hinströmbereichs, insbesondere in dem Bereich, in dem das Reaktionsmittel auf die Außenfläche auftrifft, besonders schnell hohe Temperaturen erreicht. Solche Mittel können z.B. Wärmeleitbleche bzw. Wärmetauscherbleche im Bereich des Hinströmbereichs sein, die eine Aufheizung der Wandung des Hinströmbereichs im Bereich der Außenfläche durch das Abgas beschleunigen können. Weiterhin kann die Außenfläche zumindest teilweise beheizbar ausgeführt sein, insbesondere elektrisch beheizbar. Insbesondere erfolgt die Beheizung in dem Bereich der Außenfläche, die von dem Reaktionsmittel beaufschlagt wird. Zudem können Maßnahmen getroffen werden, die den Wärmeübergang von der Außenfläche des Hinströmbereichs zu verringern. So kann sichergestellt werden, dass die einmal erreichte Temperatur der Wandung im Bereich der Außenfläche möglichst lange aufrechterhalten werden kann. Insbesondere ist der Abströmbereich nach außen hin isoliert ausgeführt, so dass die Wärme des Abgases, aber auch die Wärme, die bereits in der Außenfläche gespeichert ist, nicht ungehindert abgeführt wird.

Daher wird insbesondere eine Abgasbehandlungseinheit vorgeschlagen, bei der der Hinströmbereich zumindest ein Wärmeübertrager zur Übertragung von Wärme des Abgases hin zur Außenfläche aufweist. Ein solcher "Wärmeübertrager" motiviert insbesondere eine Wärmeabgabe aus dem Abgas hin zu der Außenfläche des Hinströmbereichs. So können beispielsweise Drallelemente, Leitschaufeln und/oder Rippen vorgesehen sein, die so mit dem anströmenden Abgas zusammenwirken, dass eine Verbesserung des Wärmeübergangs erreicht ist. Somit kann besonders effektiv die Temperatur der Außenfläche (für die rückseitige Verdampfung des Reduktionsmittels) erhöht und/oder hoch gehalten werden.

Zudem kann es vorteilhaft sein, wenn der Rückströmbereich zumindest einen Strömungsablenker zur Ablenkung oder Beruhigung des Abgases aufweist. Ein solcher Strömungsablenker hat zur Folge, dass das Abgas insbesondere den Bereich, in dem eine heiße Oberfläche auf der Außenfläche zur Reduktionsmittelverdampfung benötigt wird, nicht oder nur mit verringerte Intensität beströmt. Hierfür können zum Beispiel geeignet platzierte Strömungsabweiser vorgesehen sein, die eine Art Strömungsschatten und/oder langsame Strömungsgrenzschicht dort einstellen. Es ist jedoch auch möglich, dass der Strömungsablenker das Abgas (nur) laminarisiert und so die Intensität des Kontakts zwischen Abgas und Außenfläche reduziert. Dies führt im Ergebnis dazu, dass die Wandtemperatur durch das rückströmende Abgas wenig Wärme wieder abführt und somit die Wärme für die Verdampfung/Umsetzung des Reduktionsmittels in erhöhtem Maße zur Verfügung steht.

Weiterhin wird vorgeschlagen, dass zumindest der Rückströmbereich einen sich quer zu einer Strömungsrichtung eines Abgases ändernden Strömungsquerschnitt aufweist. Regelmäßig weisen bekannte kompakte Abgasbehandlungseinheiten konzentrisch angeordnete Hinström- bzw. Rückströmbereiche auf. In Folge der Aufbringung des Reaktionsmittels in einem Umlenkbereich wird regelmäßig der gesamte Abgasstrom mit Reaktionsmittel beaufschlagt. Bei der hier vorliegenden Abgasbehandlungseinheit ist durch die Anordnung der Zugabeeinheit im Abströmbereich insbesondere ermöglicht, dass nur ein Teil des Abgasstroms das Reaktionsmittel nach Austreten aus der Zugabeeinheit aufnimmt. Insbesondere kann der Rückströmbereich einen sich quer zu einer Strömungsrichtung (also insbesondere in Umfangsrichtung um den Hinströmbereich herum) eines Abgases ändernden (verjüngenden/erweiternden) Strömungsquerschnitt aufweisen, wenn der Hinströmbereich außermittig in Bezug auf den Rückströmbereich angeordnet wird. Somit verkleinert sich in einem Bereich der Querschnitt des Rückströmbereichs, während in einem Bereich sich dieser Querschnitt vergrößert. Dadurch kann die Abgasmenge entsprechend aufgeteilt werden, die für eine optimale Verdampfung des Reaktionsmittels erforderlich ist. Weiterhin kann durch die erst nachfolgende Vermischung mit dem restlichen Abgas eine optimale Vermischung des Reaktionsmittels im Abgasstrom erreicht werden. Durch die Einbringung des Reaktionsmittels in einen Teilstrom des Abgases wird folglich eine zumindest zweistufige Vermischung des Reaktionsmittels im Abgas erreicht: erst wird das Reaktionsmittel in den ersten Teilabgasstrom zugegeben und dann wird bereits eine feine Verteilung des Reaktionsmittels durch Auftreffen auf die Außenfläche des Hinströmbereichs erreicht. Durch die Anordnung der Zugabeeinheit in einem Bereich des Abströmbereichs, der nur von einem Teilstrom des Abgases durchströmt wird, erfolgt eine weitere Vermischung des Reaktionsmittels durch die Vermischung des bereits Reaktionsmittel aufweisenden Teilstroms des Abgases mit dem restlichen Abgasstrom, der aus dem Rückströmbereich ausströmt und in den Teil des Abströmbereichs einströmt, der nicht durch die Zugabeeinheit mit Reaktionsmittel beaufschlagt wurde.

Gemäß einer weiteren vorteilhaften Ausgestaltung weist die Außenfläche des Hinströmbereichs zumindest eine wenigstens teilweise Beschichtung oder eine Struktur, die die Oberfläche der Außenfläche vergrößert, auf. Selbstverständlich können beide Maßnahmen auch zusammen vorgesehen sein. Die Struktur und/oder Beschichtung dient somit beispielsweise dazu, die Verdampfungsfläche zu maximieren. Weiterhin kann auch zumindest der Teil der Außenfläche des Hinströmbereichs, der durch das Reaktionsmittel beaufschlagt wird, wenigstens teilweise mit mindestens einer Beschichtung versehen sein, so dass zumindest teilweise eine Umsetzung des Reaktionsmittels erfolgt. Insbesondere kann die Beschichtung hier eine Hydrolysefunktion aufweisen, so dass ein einen Reduktionsmittelvorläufer (insbesondere Harnstoff-Wasser-Lösung) aufweisendes Reaktionsmittel sich entsprechend zu einem Reduktionsmittel (hier Ammoniak) umsetzt. Dadurch kann ggf. auf einen weiteren Wabenkörper mit Hydrolyse-Katalysator-Beschichtung verzichtet werden. Dieser Hydrolysekatalysator ist, insbesondere bei einem Diesel-Motor einem SCR-Katalysator vorgeordnet, um aus einem flüssigen Harnstoff enthaltenden Reduktionsmittelvorläufer Ammoniak zu generieren, der im SCR-Katalysator eine Umsetzung der im Abgas enthaltenen NOₓ zu NO₂ ermöglicht. Zudem kann durch diese Beschichtung der Außenfläche das Volumen stromabwärts angeordneter Katalysatoren, z. B. eines Hydrolyse-Katalysators mit einer Titanoxid-Beschichtung, verringert werden. Da die Aufbringung der Beschichtung auf der Außenfläche des Hinströmbereichs sehr einfach gestaltet werden kann, liegt hier ein großes Kosteneinsparpotential gegenüber den sonst notwendigen Wabenkörperstrukturen vor. Weiterhin kann die Beschichtung eine Speicherfunktion für das Reaktionsmittel aufweisen, so dass das Reaktionsmittel z. B. in Abhängigkeit der Abgastemperatur und/oder in Abhängigkeit des Massenstroms des Abgases aus der Speicherschicht wieder herausgelöst und in dem Abgas mitgeführt wird.

Insbesondere kann die Außenfläche vergrößernde Struktur als Beschichtung (z.B. als Washcoat) und/oder mit Rippen, Noppen, Wellungen und dergleichen ausgeführt sein. Die Struktur vergrößert die verfügbare Oberfläche, auf die das Reaktionsmittel aufgebracht wird und fördert somit den Wärmeübergang von heißer Außenwand auf das Reaktionsmittel. Die die Außenfläche vergrößernde Struktur kann auch durch ein poröses Material (Vlies, Gewebe, Schaum) gebildet werden, dass auf die Außenwand aufgebracht wird und ggf. zusätzlich beschichtet werden kann.

Weiterhin wird vorgeschlagen, dass innerhalb des Hinströmbereichs ein Oxidationskatalysator angeordnet ist und ein Abgas in dem ersten Umlenkbereich so umgelenkt wird, dass es über den Rückströmbereich, der den Hinströmbereich in einem Bereich umgibt, in dem der Oxidationskatalysator angeordnet ist, in den Abströmbereich gelangt. Der Hinströmbereich weist einen stromaufwärts angeordneten Einströmbereich auf, der sich rohrförmig durch den Abströmbereich hindurch erstreckt und auf dessen Außenfläche durch die Zugabeeinheit ein Reduktionsmittel oder ein Reduktionsmittelvorläufer aufgebracht wird.

Insbesondere ist der Oxidationskatalysator zur exothermen Umsetzung von Kohlenwasserstoffen geeignet. Weiterhin können zusätzliche und/oder auch mehrteilige Wabenkörper bzw. Katalysatoren in dem äußeren Rückströmbereich angeordnet sein, auch wenn bevorzugt ist, dass dieser Rückströmbereich nicht konzentrisch und frei von Einbauten ausgeführt ist. Dabei ist der Rückströmbereich so ausgelegt, dass er den Bereich des Hinströmbereichs umgibt, in dem der Oxidationskatalysator angeordnet ist. Das heißt, dass der Abströmbereich keinen Bereich des Hinströmbereichs umfasst, in dem der Oxidationskatalysator angeordnet ist. Durch eine derartige Anordnung wird vermieden, dass durch Aufbringen des Reaktionsmittels auf den Hinströmbereich, der in dem Hinströmbereich angeordnete Oxidationskatalysator durch die ggf. auftretende Abkühlung des Rohrs bzw. Mantels des Hinströmbereichs beschädigt wird.

Der Hinströmbereich weist nun einen stromaufwärts des Oxidationskatalysators angeordneten Einströmbereich auf, der sich rohrförmig durch den Abströmbereich erstreckt und damit zumindest teilweise innerhalb des Abströmbereichs angeordnet ist. Durch diesen Einströmbereich strömt das Abgas in die Abgasbehandlungseinheit ein. Durch die funktionale Trennung des (frei von Einbauten bereitgestellten) Einströmbereichs und des (einen Wabenkörper bzw. Katalysator aufweisenden) Hinströmbereichs kann der Einströmbereich speziell auf die Erfordernisse hinsichtlich der Einbindung in das Gehäuse der Abgasbehandlungseinheit und hinsichtlich der Aufbringung des Reaktionsmittels auf seine Oberfläche ausgelegt werden.

Zudem wird ein Kraftfahrzeug mit einer Verbrennungskraftmaschine, einer Abgasleitung und einer Einrichtung zur Bereitstellung eines Reaktionsmittels vorgeschlagen, wobei die Abgasleitung zumindest eine erfindungsgemäße Abgasbehandlungseinheit aufweist. Als Verbrennungskraftmaschine sind hier insbesondere Diesel- oder auch Otto-Verbrennungskraftmaschinen vorgesehen. Die Einrichtung zur Bereitstellung eines Reaktionsmittels umfasst insbesondere einen Reaktionsmittelvorratsbehälter und eine Fördereinrichtung zur Förderung des Reaktionsmittels aus dem Vorratsbehälter zu der Zugabeeinheit sowie eine entsprechende Steuerung zur entsprechenden Dosierung des Reaktionsmittels.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Es zeigen:
- Fig. 1:: ein Kraftfahrzeug mit einer Abgasleitung,
- Fig. 2:: eine erste Ausführung einer Abgasbehandlungseinheit, und
- Fig. 3:: eine zweite Ausführung einer Abgasbehandlungseinheit.

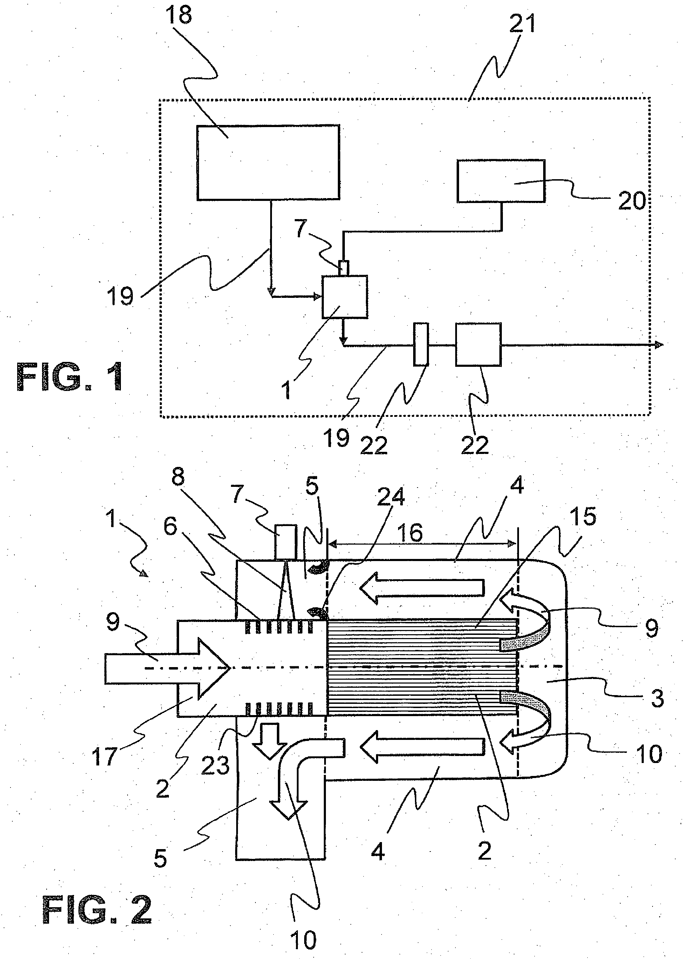

Fig. 1 veranschaulicht schematisch die Anordnung einer Abgasbehandlungseinheit 1 innerhalb eines Kraftfahrzeugs 21. Das Kraftfahrzeug 21 weist eine Verbrennungskraftmaschine 18 auf, die über eine Abgasleitung 19 ein Abgas an die Umgebung abführt. Innerhalb der Abgasleitung 19 ist eine Abgasbehandlungseinheit 1 vorgesehen, die eine Zugabeeinheit 7 aufweist. Die Zugabeeinheit 7 ist mit einer Einrichtung 20 verbunden, die das Reaktionsmittel ggf. gesteuert der Abgasbehandlungseinheit 1 zuführt. Stromabwärts der Abgasbehandlungseinheit 1 sind innerhalb der Abgasleitung 19 weitere Elemente 22 (wenigstens eines aus der Gruppe: Katalysatoren, Filter, Partikelabscheider, Turbolader, Adsorber, etc.) angeordnet, die die Abgasreinigung unterstützen.

Fig. 2 zeigt schematisch eine erste Ausführung der Abgasbehandlungseinheit 1. Dabei tritt eine Abgas 10 über einen Hinströmbereich 2 in die Abgasbehandlungseinheit 1 in einer Strömungsrichtung 9 ein. Der Hinströmbereich 2 weist eine (z. B. wenigstens abschnittsweise zylindrische, konische, etc.) Außenfläche 6 und eine Mehrzahl Wärmeübertrager 23 zur Übertragung von Wärme des Abgases hin zur Außenfläche 6 auf. Weiterhin ist innerhalb des Hinströmbereichs 2 ein Oxidationskatalysator 15 angeordnet. Das Abgas 10 durchströmt den Hinströmbereich 2 und anschließend den Oxidationskatalysator 15 und wird in einem ersten Umlenkbereich 3 so umgelenkt, dass das Abgas 10 danach konzentrisch außen an den Hinströmbereich 2 vorbei durch den Rückströmbereich 4 in Richtung des Abströmbereichs 5 geführt wird. Hierbei sind im Rückströmbereich 5 mehrere Strömungsablenker 24 zur Ablenkung oder Beruhigung des Abgases vorgesehen, so dass das Abgas den Bereich, in dem das Reduktionsmittel auf die heiße Außenfläche 6 auftrifft, nur mit reduzierter Intensität erreicht.

Der Hinströmbereich 2 weist einen Bereich 16 auf, in dem der Oxidationskatalysator 15 angeordnet ist. Nach Verlassen des Rückströmbereichs 4 strömt das Abgas 10 in den Abströmbereich 5 ein. Ein Teil des Abgases 10 überströmt die Außenfläche 6 des Hinströmbereichs 2, auf die zumindest in einem Teilbereich ein Reaktionsmittel 8 aufgebracht wird. Das Reaktionsmittel 8 wird über eine Zugabeeinheit 7 in den Abströmbereich 5 eingeführt. Dabei ist die Zugabeeinheit 7 auf der dem Austritt des Abgases gegenüberliegenden Seite des Hinströmbereichs 2 angeordnet, ein gegebenenfalls besonders wichtiges Detail, damit ein direktes Verlassen des Reaktionsmittels 8 über den Austritt vermieden werden kann. Das Abgas 10 vereinigt sich innerhalb des Abströmbereichs 5 und strömt aus der Abgasbehandlungseinheit 1 aus.

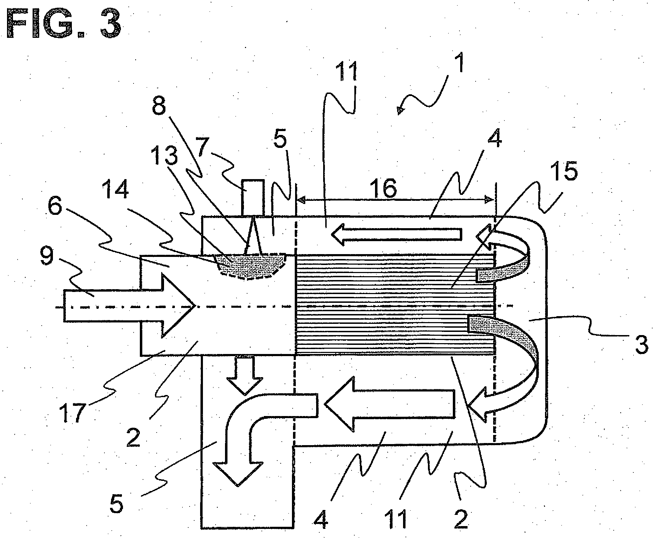

Fig. 3 zeigt schematisch eine zweite Ausführung der Abgasbehandlungseinheit 1, wobei auch hier das Abgas 10 in einer Strömungsrichtung 9 in den Hinströmbereich 2 eindringt. Innerhalb des Hinströmbereichs 2 ist ein Einströmbereich 17 angeordnet, an den sich der Bereich 16 anschließt. In dem Bereich 16 ist der Oxidationskatalysator 15 angeordnet. Das Abgas 10 wird in dem Umlenkbereich 3 so umgelenkt, dass es den Hinströmbereich 2 konzentrisch durch den Rückströmbereich 4 umströmt. Hier ist dargestellt, dass der Hinströmbereich 2 nicht zentriert innerhalb der Abgasbehandlungseinheit 1 angeordnet ist, so dass der Strömungsquerschnitt 11 im oberen Teil der Abgasbehandlungseinheit 1 kleiner ist und einen reduzierten Rückströmbereich 4 bildet. Im unteren Teil der Abgasbehandlungseinheit 1 weist der Rückströmbereich 4 einen größeren Strömungsquerschnitt 11 auf. Die Zugabeeinheit 7 ist im Abströmbereich 5 der Abgasbehandlungseinheit 1 angeordnet und gibt das Reaktionsmittel 8 zumindest teilweise auf die Außenfläche 6 des Einströmbereichs 17 auf. Dabei ist die Zugabeeinheit 7 wieder auf der dem Austritt des Abgases gegenüberliegenden Seite des Hinströmbereichs 2 angeordnet, um ein direktes Verlassen des Reaktionsmittels 8 über den Austritt zu vermeiden. Auf der Außenfläche 6 ist eine Struktur 13 aufgebracht, die die Oberfläche 14, auf die das Reaktionsmittel 8 trifft, vergrößert, so dass die Verdampfung des Reaktionsmittels 8 verbessert wird.

Die vorliegende Erfindung mit all ihren Varianten löst die mit Bezug auf den Stand der Technik geschilderten Probleme. Insbesondere wird eine Beschädigung von einem Wabenkörper bzw. von dessen Beschichtung vermieden, da das Reaktionsmittel nicht auf den Wabenkörper bzw. auf die Beschichtung direkt aufgebracht wird. Die Verdampfung des Reaktionsmittels wird insbesondere durch eine mehrstufige Vermischung des Abgases mit dem Reaktionsmittel bzw. durch Bereitstellung einer robusten Oberfläche erreicht. Weiterhin können so besonders heiße Bereiche der Abgasleitung zur Verdampfung des Reaktionsmittels genutzt werden. Die Zugabeeinheit kann so innerhalb des Abströmbereichs angeordnet sein, dass auch eine gegen die Strömungsrichtung des Abgases gerichtete Zugabe möglich ist und eine entsprechende Verteilung des Reaktionsmittels innerhalb des Abgases verbessert wird.

### Bezugszeichenliste

- 1: Abgasbehandlungseinheit
- 2: Hinströmbereich
- 3: Umlenkbereich
- 4: Rückströmbereich
- 5: Abströmbereich
- 6: Außenfläche
- 7: Zugabeeinheit
- 8: Reaktionsmittel
- 9: Strömungsrichtung
- 10: Abgas
- 11: Strömungsquerschnitt
- 12: Beschichtung
- 13: Struktur
- 14: Oberfläche
- 15: Oxidationskatalysator
- 16: Bereich
- 17: Einströmbereich
- 18: Verbrennungskraftmaschine
- 19: Abgasleitung
- 20: Einrichtung
- 21: Kraftfahrzeug
- 22: Element
- 23: Wärmeübertrager
- 24: Strömungsablenker

## Patentansprüche

1. Abgasbehandlungseinheit (1) zumindest aufweisend strömungstechnisch hintereinander angeordnet einen Hinströmbereich (2), einen Umlenkbereich (3), einen Rückströmbereich (4) und einen Abströmbereich (5), wobei der Rückströmbereich (4) und der Abströmbereich (5) auf einer Außenfläche (6) des Hinströmbereichs (2) angeordnet sind, sowie eine Zugabeeinheit (7) für ein Reaktionsmittel (8), wobei die Zugabeeinheit (7) im Abströmbereich (5) angeordnet ist, wobei die Zugabeeinheit (7) derart angeordnet ist, dass das Reaktionsmittel (8) zumindest teilweise auf die Außenfläche (6) des Hinströmbereichs (2) zugebbar ist, wobei die Zugabeeinheit (7) hierfür radial außerhalb des Hinströmbereichs (2) angeordnet und hin zum Hinströmbereich (2) ausgerichtet ist.

2. Abgasbehandlungseinheit (1) nach Patentanspruch 1, wobei die Außenfläche (6) zumindest teilweise beheizbar ist.

3. Abgasbehandlungseinheit (1) nach einem der vorhergehenden Patentansprüche, wobei zumindest der Rückströmbereich (4) einen sich quer zu einer Strömungsrichtung (9) eines Abgases (10) ändernden Strömungsquerschnitt (11) aufweist.

4. Abgasbehandlungseinheit (1) nach einem der vorhergehenden Patentansprüche, wobei die Außenfläche (6) des Hinströmbereichs (2) zumindest eine wenigstens teilweise Beschichtung (12) oder eine Struktur (14), die eine Oberfläche (13) der Außenfläche (6) vergrößert, aufweist.

5. Abgasbehandlungseinheit (1) nach einem der vorhergehenden Patentansprüche, wobei der Hinströmbereich (2) zumindest ein Wärmeübertrager (23) zur Übertragung von Wärme des Abgases hin zur Außenfläche (6) aufweist.

6. Abgasbehandlungseinheit (1) nach einem der vorhergehenden Patentansprüche, wobei der Rückströmbereich (5) zumindest ein Strömungsablenker (24) zur Ablenkung oder Beruhigung des Abgases aufweist.

7. Abgasbehandlungseinheit (1) nach einem der vorhergehenden Patentansprüche, wobei innerhalb des Hinströmbereichs (2) ein Oxidationskatalysator (15) angeordnet ist und ein Abgas (10) in dem ersten Umlenkbereich (3) so umgelenkt wird, dass es über den Rückströmbereich (4), der den Hinströmbereich (2) in einem Bereich (16) umgibt, in dem der Oxidationskatalysator (15) angeordnet ist, in den Abströmbereich (5) gelangt; wobei der Hinströmbereich (2) einen stromaufwärts angeordneten Einströmbereich (17) aufweist, der sich rohrförmig durch den Abströmbereich (5) hindurch erstreckt und auf dessen Außenfläche (6) durch die Zugabeeinheit (7) ein Reduktionsmittel oder ein Reduktionsmittelvorläufer aufgebracht wird.

8. Kraftfahrzeug (21) mit einer Verbrennungskraftmaschine (18), einer Abgasleitung (19) und einer Einrichtung (20) zur Bereitstellung eines Reaktionsmittels (8), wobei die Abgasleitung (19) zumindest eine Abgasbehandlungseinheit (1) nach einem der vorhergehenden Patentansprüche aufweist.

## Claims

1. Exhaust gas treatment unit (1) at least comprising, arranged in series in terms of flow, an approach flow region (2), a diverting region (3), a backflow region (4) and an outflow region (5), wherein the backflow region (4) and the outflow region (5) are arranged on an outer surface (6) of the approach flow region (2), as well as an addition unit (7) for a reaction agent (8), wherein the addition unit (7) is arranged in the outflow region (5), wherein the addition unit (7) is arranged in such a way that the reaction agent (8) can be fed at least partially onto the outer surface (6) of the approach flow region (2), wherein, for this purpose, the addition unit (7) is arranged radially to the outside of the approach flow region (2) and aligned toward the approach flow region (2).

2. Exhaust gas treatment unit (1) according to Patent Claim 1, wherein the outer surface (6) can be heated at least in part.

3. Exhaust gas treatment unit (1) according to one of the preceding patent claims, wherein at least the backflow region (4) has a flow cross section (11) which changes transversely to a flow direction (9) of an exhaust gas (10).

4. Exhaust gas treatment unit (1) according to one of the preceding patent claims, wherein the outer surface (6) of the approach flow region (2) has at least one at least partial coating (12) or a structure (14), which increases a surface area (13) of the outer surface (6).

5. Exhaust gas treatment unit (1) according to one of the preceding patent claims, wherein the approach flow region (2) has at least one heat transfer element (23) for transferring heat in the exhaust gas to the outer surface (6).

6. Exhaust gas treatment unit (1) according to one of the preceding patent claims, wherein the backflow region (5) has at least one flow deflector (24) for deflecting or calming the exhaust gas.

7. Exhaust gas treatment unit (1) according to one of the preceding patent claims, wherein an oxidation catalyst (15) is arranged within the approach flow region (2), and an exhaust gas (10) is diverted in the first diverting region (3) in such a way that it passes via the backflow region (4), which surrounds the approach flow region (2) in a region (16) in which the oxidation catalyst (15) is arranged, into the outflow region (5); wherein the approach flow region (2) has an inflow region (17) arranged upstream, which extends in the form of a tube through the outflow region (5) and to the outer surface (6) of which a reducing agent or a reducing agent precursor is applied by the addition unit (7).

8. Motor vehicle (21) having an internal combustion engine (18), an exhaust line (19) and a device (20) for supplying a reaction agent (8), wherein the exhaust line (19) has at least one exhaust gas treatment unit (1) according to one of the preceding patent claims.

## Revendications

1. Unité (1) de traitement des gaz d'échappement ayant au moins, disposées les unes derrières les autres en technique des fluides, une partie (2) d'afflux, une partie (3) de déviation, une partie (4) de reflux et une partie (5) d'évacuation, la partie (4) de reflux et la partie (5) d'évacuation étant disposées sur une face (6) extérieure de la partie (2) d'afflux, ainsi qu'une unité (7) d'addition d'un agent (8) de réaction, l'unité (7) d'addition étant disposée dans la partie (5) d'évacuation, l'unité (7) d'addition étant disposée de manière à pouvoir ajouter l'agent (8) de réaction, au moins en partie, sur la face (6) extérieure de la partie (2) d'afflux, l'unité (7) d'addition étant disposée pour cela radialement à l'extérieur de la partie (2) d'afflux et étant dirigée vers la partie (2) d'afflux.

2. Unité (1) de traitement des gaz d'échappement suivant la revendication 1, dans laquelle la face (6) extérieure peut être chauffée, au moins en partie.

3. Unité (1) de traitement des gaz d'échappement suivant l'une des revendications précédentes, dans laquelle au moins la partie (4) de reflux a une section (11) transversale d'écoulement se modifiant transversalement à un sens (9) d'écoulement de gaz (10) d'échappement.

4. Unité (1) de traitement des gaz d'échappement suivant l'une des revendications précédentes, dans laquelle la face (6) extérieure de la partie (2) d'afflux a au moins un revêtement (12), au moins en partie, ou une structure (14) qui agrandit une surface (13) de la face (6) extérieure.

5. Unité (1) de traitement des gaz d'échappement suivant l'une des revendications précédentes, dans laquelle la partie (2) d'afflux a au moins un échangeur de chaleur (23) pour transmettre de la chaleur des gaz d'échappement à la face (6) extérieure.

6. Unité (1) de traitement des gaz d'échappement suivant l'une des revendications précédentes, dans laquelle la partie (5) de reflux a au moins un déviateur (24) de courant pour dévier ou pour tranquilliser les gaz d'échappement.

7. Unité (1) de traitement des gaz d'échappement suivant l'une des revendications précédentes, dans laquelle il est disposé, à l'intérieur de la partie (2) d'afflux, un catalyseur (15) d'oxydation et des gaz d'échappement (10) sont déviés dans la première partie (3) de déviation, de manière à parvenir dans la partie (5) d'évacuation, en passant par la partie (4) de reflux qui entoure la partie (2) d'afflux dans une partie (16), dans laquelle est mis le catalyseur (15) d'oxydation ; la partie (2) d'afflux ayant une partie (17) d'entrée en amont, qui s'étend en forme de tube en passant à travers la partie (5) d'évacuation et sur la face (6) extérieure de laquelle est déposé, par l'unité (7) d'addition, un agent réducteur ou un précurseur d'agent réducteur.

8. Véhicule (21) automobile ayant un moteur (18) à combustion interne à un conduit (19) pour les gaz d'échappement et un dispositif (20) de mise à disposition d'un agent (8) de réaction, le conduit (19) pour les gaz d'échappement ayant au moins une unité (1) de traitement des gaz d'échappement suivant l'une des revendications précédentes.
